(19) Europäisches Patentamt
European Patent Office
Office européen des brevets

(11) EP 2 688 892 B1

# (12) EUROPEAN PATENT SPECIFICATION

(45) Date of publication and mention of the grant of the patent:
**18.11.2020 Bulletin 2020/47**

(21) Application number: **11712723.3**

(22) Date of filing: **21.03.2011**

(51) Int Cl.:
***G02B 1/04*** (2006.01) ***C08L 101/14*** (2006.01)
***C08F 230/08*** (2006.01) ***C08F 220/20*** (2006.01)
***C07F 7/08*** (2006.01) ***C08F 236/12*** (2006.01)
***C09D 133/14*** (2006.01)

(86) International application number:
**PCT/US2011/029165**

(87) International publication number:
**WO 2012/128752 (27.09.2012 Gazette 2012/39)**

## (54) SILOXANE MONOMERS CONTAINING HYDROLYSIS RESISTANCE CARBOSILOXANE LINKAGE AND THIN FILMS CONTAINING THE SAME FOR CONTACT LENS APPLICATION

SILOXANMONOMERE MIT HYDROLYSERESISTENTER CARBOSILOXANVERBINDUNG UND DÜNNFILME DAMIT FÜR KONTAKTLINSEN

MONOMÈRES SILOXANES CONTENANT UNE LIAISON DE CARBOSILOXANE DE RÉSISTANCE À L'HYDROLYSE ET FILMS MINCES LES CONTENANT POUR UNE APPLICATION AUX LENTILLES DE CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.01.2014 Bulletin 2014/05**

(73) Proprietor: **Momentive Performance Materials Inc.**
**Waterford, NY 12188 (US)**

(72) Inventors:
- **SAXENA, Anubhav**
  **Bangalore 560027 (IN)**
- **SENTHILKUMAR, Umapathy**
  **Bangalore 560066 (IN)**
- **LEWIS, Kenrick, M.**
  **Flushing, NY 11358 (US)**

(74) Representative: **Gille Hrabal**
**Brucknerstrasse 20**
**40593 Düsseldorf (DE)**

(56) References cited:
**EP-A1- 0 131 911**
**WO-A1-86/01219**
**GB-A- 2 119 951**
**JP-A- 63 295 611**
**US-A1- 2011 009 658**

- **EFIMOV Y T ET AL: "Synthesis of organosilicon derivatives of acrylic acids", JOURNAL OF GENERAL CHEMISTRY OF THE USSR, vol. 61, no. 10 PART 02, 1991, pages 2083-2091, XP000289683, ISSN: 0022-1279**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## FIELD OF THE INVENTION

The present invention relates to functional silicone monomers comprising hydrolytically stable carbosiloxane linkages and polymers thereof. The present invention is also directed to hydrogel compositions useful for the production of biomedical devices, particularly soft contact lenses characterized by high oxygen permeability, high water content, low protein denaturation behavior and strong resistance to hydrolysis across a range of pH and temperature ranges.

## BACKGROUND OF THE INVENTION

Any publications or references discussed herein are presented to describe the background of the invention and to provide additional detail regarding its practice. Nothing herein is to be construed as an admission that the inventors are not entitled to antedate such disclosure by virtue of prior invention.

Silicone-hydrogel films are used to make extended wear soft contact lenses due to their high oxygen permeability, flexibility, comfort and reduced corneal complications. Conventional hydrogel materials (e.g. HEMA), by themselves have poor oxygen permeability and they transport oxygen to the eye through the absorbed water molecules. Water itself has a low Dk value (80 barrer). 1 Barrer = $10^{-11}$ ($cm^3$ $O_2$) cm $cm^{-2}$ $s^{-1}$ $mmHg^{-1}$ where $cm^3$ $O_2$' is at a quantity of oxygen at standard temperature and pressure and where 'cm' represents the thickness of the material and $cm^{-2}$ is the reciprocal of the surface area of that material. Lenses made from conventional hydrogel materials, upon exposure to atmospheric air for long periods, get slowly dehydrated and the amount of oxygen transported to the cornea is reduced, which leads to eye irritation, redness and other corneal complications, all of which restrict their use for extended periods of wear.

Silicone-hydrogels with the comfort of soft contact lenses and significantly higher oxygen permeability overcame these obstacles for extended wear and were revolutionary in the field of ophthalmic lenses. The following patents describe silicone-hydrogels for use in extended wear contacts: US Patents 4,954,587; 5,010,141; 5,079,319; 5,115,056; 5,260,000; 5,336,797; 5,358,995; 5,387,632; 5,451,617; 5,486,579 and 5,998,498.

US 3,808,178 claims compositions prepared by copolymerization of a poly-siloxanylalkyl acrylic ester and an alkyl acrylic ester for the production of contact lenses with increased oxygen permeability. The compositions disclosed (see Columns 2 and 3) have trisiloxane (Si-O-Si-O-Si) and siloxycarbo (Si-O-C) linkages, which are susceptible to hydrolysis in spite of the presence of sterically hindered groups attached to silicon.

The polymer obtained by copolymerizing 3-[tris(trimethylsiloxy)silyl]propyl methacrylate (usually abbreviated TRIS), $[(CH_3)_3SiO]_3Si(CH_2)_3OOCC(CH_3)=CH_2$, and N,N-dimethylacrylamide, $H_2C=CHCON(CH_3)_2$, is disclosed in US 5,358,995 and 5,387,632, as a hydrogel composition useful for preparing ophthalmic lenses with good wettability and oxygen permeability. However, if a carboxylic acid such as methacrylic acid is included in the copolymerization to improve the water content of the product, the composition is gradually hydrolyzed and contact lenses made from it degrade when stored in aqueous media. US 3,377,371 and US 2008/0081894 A1 disclose use of sterically hindered derivatives of TRIS to forestall this type of degradation. However, the continued presence of siloxycarbo (Si-O-C-) and/or trisiloxane (Si-O-Si-O-Si) units in the compositions makes them susceptible to hydrolysis. US 4,260,725 and US 4,259,467 disclose hydrolytically stable contact lens comprising polysiloxane-containing hydrophilic side chains. The disclosed polysiloxane monomers are bifunctional in nature and have -Si-C linkages instead of -Si-O-C- bonds in terminal positions. However, in the lens industry mono-functional monomers are preferred more than multi-functional monomers as they give better control of the modulus of the final lens material. The instant invention discloses mono-functional monomers comprising carbosiloxane linkages (for example, $Si-CH_2CH_2-Si$ and $Si-CH_2-CH_2-Si-O-Si$) to avoid the material degradation problems attendant to hydrolysis, while at the same time providing better surface wettability and oxygen permeability to films, lenses and other objects made from said monomers.

Carbosiloxanes contain both the $-Si(CHR)_x-Si-$ and -Si-O-Si-functionalities. R is hydrogen or a hydrocarbyl group such as an alkyl, cycloalkyl or aryl group. The subscript x is an integer greater than or equal to 1. Use of carbosiloxanes to impart hydrolysis resistance to surfactants in agricultural and other topical formulations is disclosed in US 7,700,797 B2 and 7,507,775 B2. The instant invention discloses the acrylate and methacrylated carbosiloxane monomers, having improved hydrolysis resistance, that can be copolymerized with unsaturated hydrophilic monomers, such as N-vinyl pyrrolidone and N,N-dimethylacrylamide, to produce silicone hydrogels suitable for ophthalmic lenses.

In their study of gas permeability through silicone polymer membranes, Stern, et al (J. Polymer Science Part B: Polymer Physics 25 (1987) 1263 - 1298) reported that substitution of methyl groups by bulky groups (e.g., ethyl, isopropyl, butyl, hexyl) on the silicone backbone, or the replacement of siloxane (-SiOSi-) linkage by carbosilane $(-Si(CH_2)_nSi-)$ linkage resulted in reduced oxygen permeability. Based on Stern et al report, one would expect the oxygen permeability to get reduced when siloxane linkage (-Si-O-Si) is replaced by carbosiloxane linkage $(-Si(CH_2)_nSi-)$ in the backbone chain. Surprisingly, the silicone hydrogel film produced using the carbosiloxane monomer of the current

invention showed improved oxygen permeability in comparison to the corresponding siloxane monomer having conventional siloxane linkage.

US 2011/0009658 A1 relates to monomers useful in the manufacture of biocompatible medical devices. A study of reactions of organohydrochlorosilanes with allyl acrylates is known from Efimov Y. et al. "Synthesis of organosilicon derivatives of acrylic acids" Journal of general chemistry of the USSR, vol. 61, No. 10 Part 02, 1991, pages 2083-2091. Moreover, JP 63- 295611 A and WO 86/01219 A1 provide materials for contact lenses. However, none of these documents focuses on the miscibility of the monomers.

Moreover, from EP 0 131 911 A1 materials exhibiting high oxygen permeability are known.

GB 2 119 951 A relates to hard contact lenses exhibiting high oxygen permeability.

The instant invention provides carbosiloxane monomers and polymers derived there from that satisfy the deficiencies that exist in current state-of-the-art products and technologies.

## SUMMARY OF THE INVENTION

An object of the present invention is to provide a silicone monomer having the following general formulae (I):

$$(R^1R^2R^3)Si\text{-}Y^1\text{-}\ [Si(R^4R^5)(y^2)]_a\ \text{-}\ Si(R^6R^7)\ \text{-}\ Z \qquad \text{(I)}$$

wherein a is 0 to 100; $Y^1$ is an unsubstituted divalent alkyl linking group of 1 to 10 carbon atoms; $Y^2$ is hetero atom; $R^1$, $R^2$, $R^3$, $R^4$, $R^5$, $R^6$, and $R^7$ are independently selected from the group consisting of monovalent aliphatic hydrocarbon groups of 1 to 10 carbons,
Z has the following general formulae (II)

$$\text{-}\ R^{11}\ \text{-}\ B\ \text{-}\ X \qquad \text{(II)}$$

wherein $R^{11}$ is a linear or branched, divalent alkyl linking group having 0 to 20 carbon atoms; B is one of the following moieties

$$\text{-}O\text{-}(C_2H_4O)_p\text{-}(C_3H_6O)_q\text{-}(C_4H_8O)_r\text{-}$$

Polyether
wherein p and q are independently 0 to 100; r is 0 to 50 and (p +q + r) is greater than 0, or

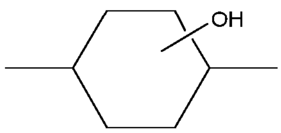

Hydroxylcyclohexanyl,

and X is acrylamide or a polymerizable group selected from the group consisting of substituted or unsubstituted unsaturated aliphatic hydrocarbons, substituted or unsubstituted aromatic hydrocarbons, acrylates and methacrylates..

Another object of the present invention is to provide homo and copolymers derived from the described monomers and silicone hydrogels containing the same.

Still another object of the present invention is to provide soft, flexible, transparent, water absorbing, inherently wettable and better oxygen permeable contact lens comprising the silicone-hydrogel film of the present invention.

The present invention is further described in the detailed description section including the examples provided below.

## DETAILED DESCRIPTION OF THE INVENTION

In accordance with the present invention, mono- acrylate and methacrylate functionalized carbosiloxane monomers that are non-bulky, show improved hydrolysis resistance and useful for preparing silicone-hydrogel films for contact lens applications are disclosed. Carbosiloxane monomer of the present invention showed improved hydrolysis resistance under acidic and basic pH conditions in comparison to the corresponding conventional siloxane monomers. Silicone hydrogel films obtained with these monomers also showed better oxygen permeability, surface wettability and low modulus in comparison to films of the corresponding conventional siloxane monomers.

In the present invention, the monomers disclosed have a carbosilane linkage, $\text{-}Si\text{-}(CH_2)_n\text{-}Si\text{-}$, which makes it

possible to produce hydrolytically stable (hydrolysis resistance) monomers and polymers. It also produces silicone hydrogel film with improved oxygen permeability in comparison to corresponding conventional siloxane monomer.

The silicone - hydrogel film of the present invention also provides better surface wettability without any secondary surface treatment, like plasma oxidation or plasma coating, or internal wetting agents. That is, the contact lenses produced from silicone-hydrogel films of the present invention, without secondary treatment, are soft, flexible and inherently wettable with high oxygen permeability. The monomers of the present invention also allow for miscibility with hydrophilic organic comonomers without the need for any solvent and the silicone hydrogels thus produced are transparent in entire range of compositions.

As used herein, "homopolymers" are polymers made from the same repeating monomer and ’copolymers" are polymers wherein the polymer contains at least two structurally different monomers. Notations such as (meth)acrylate denote monomer with either acrylate or methacrylate functionality.

Also, as used in the specification and including the appended claims, the singular forms "a," "an," and "the" include the plural, and reference to a particular numerical value includes at least that particular value, unless the context clearly dictates otherwise.

Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

All methods described herein may be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

As used herein, "comprising," "including," "containing," "characterized by," and grammatical equivalents thereof are inclusive or open-ended terms that do not exclude additional, unrecited elements or method steps, but will also be understood to include the more restrictive terms "consisting of" and "consisting essentially of."

The monomers of the present invention can be used to obtain cured elastomer sheets with desirable physical strength and resistance to tearing after absorption of water. The (meth)acrylate functionalized silicone monomers/polymers of the present invention and their preparation and use in contact lens are further described in the sections below.

The present invention also provides silicone-hydrogel compositions comprising (meth)acrylated carbosiloxane monomers and conventional monomers such as HEMA or other contact lens monomers to produce soft, flexible water absorbing films. The homo and copolymers of the present invention are clear (no haze from poor miscibility) polymers that absorb water, have excellent surface wettability and oxygen permeability, which are necessary for the better comfort and good health of the human cornea. The present invention also provides contact lenses made from the silicone-hydrogel films of the claimed invention. These embodiments are further described below.

The silicone monomers having carbosilane linkage, -Si-$(CH_2)_n$-Si-, produced in the current invention may be used to form homo/copolymers that produce hydrolytically stable silicone-hydrogel films. The film shows inherent wettability and better oxygen permeability in comparison to films with conventional siloxane monomers. The contact lenses produced from the silicone-hydrogel films of the present invention do not require any expensive secondary treatments, like plasma oxidation or plasma coating, or internal wetting agents to improve wettability. That is, the contact lenses produced from silicone-hydrogel films of the present invention, without secondary treatment, are soft, flexible and inherently wettable with high oxygen permeability.

The mono- acrylate functional carbosiloxane monomers of the present invention have the general structure shown in formula (I) as defined above:

$$(R^1R^2R^3)Si\text{-}Y^1\text{-}[Si(R^4R^5)(Y^2)]_a\text{-}Si(R^6R^7)\text{ - }Z \qquad (I)$$

One of the preferred variants of the formula (I) of the present invention is the mono acrylate functional monomer having the general formula as shown below.

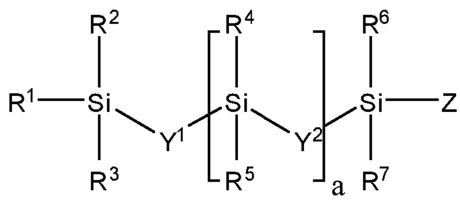

wherein a is 0 to 100; $Y^1$ is an unsubstituted divalent alkyl linking group of 1 to 10 carbon atoms, and $Y^2$ is a hetero atom such as nitrogen, oxygen or sulfur. $R^1$ to $R^7$ is independently selected from the group consisting of monovalent aliphatic, hydrocarbon groups of 1 to 10 carbons.

Z in the above structure can have the general formula (II) shown below

$$-R^{11}\text{-B-X} \qquad \text{(II)}$$

wherein $R^{11}$ is a linear or branched, divalent alkyl linking group having 0 to 20 carbon atoms.

B in general formula (II) is one of the following moieties:

$$-O-(C_2H_4O)_p-(C_3H_6O)_q-(C_4H_8O)_r-O-$$

Polyether

wherein p and q are independently 0 to 100; r is 0 to 50 and (p +q + r) is greater than 0,

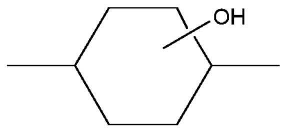

Hydroxycyclohexanyl,

X is acrylamide or a polymerizable group having the general formula (III)

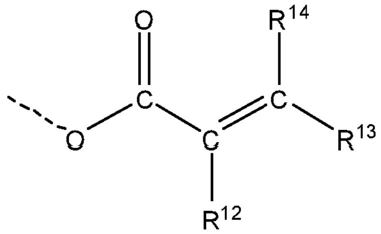

(III)

wherein $R^{12}$ to $R^{14}$ can be selected from hydrogen or a substituted or unsubstituted saturated monovalent hydrocarbon group of 1 to 20 carbons.

Also described are polymers formed by the reaction products of the monomers provided herein. These polymers may be homopolymers of one of the monomers of the present invention or copolymers of two structurally different silicone monomers of the present invention, and/or copolymers of one or more silicone monomers of the present invention and at least one other hydrophilic unsaturated organic monomers suitable for use in silicone hydrogels, with preferred non-limiting examples of such being N,N-dimethylacrylamide, 2-hydroxy-ethyl-methacrylate (HEMA), N-vinylpyrrolidone, and methacrylic acid. In such copolymers, the ratio of the silicone monomers of the present invention to the other hydrophilic unsaturated organic monomers is from 1:100 to 100:1 and preferably from 20:80 to 90:10 and more preferably from 30:70 to 80:20.

The unsaturated organic monomers and the carbosiloxane monomers of this invention are mutually miscible and form homogeneous mixtures. The use of compatibilizing solvents is not necessary. The carbosiloxane monomers of this invention are also either water-soluble or water- dispersible. Water-soluble carbosiloxane monomers are miscible with water to yield homogeneous solutions. Water-dispersible carbosiloxane monomers do not dissolve completely in water. Cloudiness, haze, colloid formation and similar visible signs of heterogeneity in the aqueous mixture are indicative of dispersion rather than solution. Both water solubility and water dispersibility are desirable features of the carbosiloxane monomers of the instant invention. When the carbosiloxane monomers contain a methacrylated ethoxylated polyether segment, water dispersibility is observed when the polyether content is less than 60 weight percent of the total molecular weight, and water solubility when the polyether segment is greater than 60 weight percent.

To form polymers using the monomers of the present invention, the desired monomers are mixed and the resulting mixture is polymerized and cured to form transparent thin films by known thermal techniques using free radical or cationic or anionic initiators and UV cure techniques using photoinitiators in the presence of crosslinking agents. The monomers added to the reaction mixture to form the polymers may be monomers or prepolymers. A "prepolymer" is a reaction intermediate polymer of medium molecular weight having polymerizable groups. Thus, it is understood that the terms "silicone-containing monomers" and "hydrophilic monomers" include prepolymers. The present invention is also

directed to silicone hydrogel films comprising the homopolymers or copolymers detailed above.

One preferred variant of silicone monomer from structure (I) of the present invention has the following formula

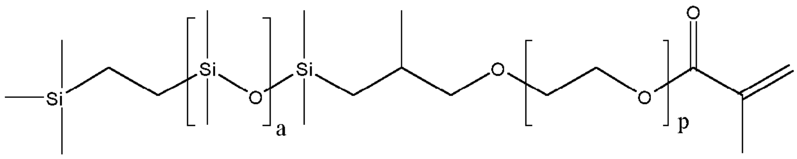

wherein B is a divalent polyether as shown in the representative example with p is 0 to 100, preferably 2 to 15, more preferably 8, and q and r equals to 0; $Y^1$ is a divalent alkyl-linking group of 2 carbons. $Y^2$ is a divalent heteroatom and X is polymerizable methacrylate group. a is 0 to 100, more preferably 0 to 20 inclusive, and even more preferably 1. Each of the R groups in the general monomer structure (I) is a methyl group. Another preferred variant of silicone monomer from structure (I) of the present invention has the following formula

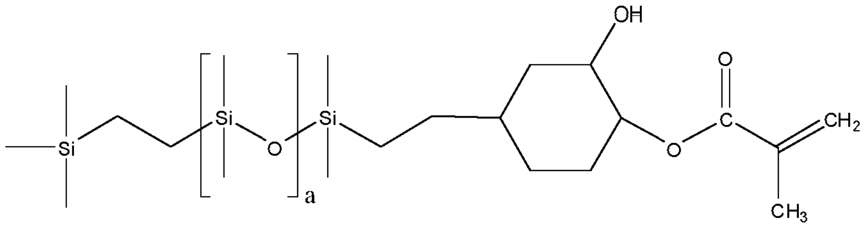

wherein B is a divalent hydroxyl containing cycloaliphatic ring; X is polymerizable methacrylate group, a is 0 to 100, more preferably 0 to 20 inclusive, and even more preferably 1. $Y^1$ is a divalent alkyl-linking group of 2 carbons. $Y^2$ is a divalent heteroatom. Each of the R groups in the general monomer structure (I) is a methyl group.

Also described is a process for producing the described silicone monomers comprising chemically reacting a silicone-containing compound having the general formula shown below

$$(R^1R^2R^3)Si\text{-}Y^1\text{-}[Si(R^4R^5)(Y^2)]_a\text{-}Si(R^6R^7)\text{ -H} \qquad (I)$$

wherein a is 0 to 100; $Y^1$ is a substituted or unsubstituted divalent alkyl linking group of 1 to 10 carbon atoms, and $Y^2$ is a hetero atom. $R^1$ to $R^7$ is independently selected from the group consisting of monovalent aliphatic, hydrocarbon groups of 1 to 10 carbons. Once produced it is reacted with terminally unsaturated group having the general formula as shown below (II)

$$R^{15}\text{-B-M} \qquad (II)$$

wherein $R^{15}$ is a linear or branched unsaturated alkyl group having 0 to 20 carbon atoms, B is a precursor for one of the following moieties

$$-O-(C_2H_4O)_p-(C_3H_{6O})_q-(C_4H_8O)_r-$$

Polyether wherein p and q are independently 0 to 100; r is 0 to 50 and (p +q + r) is greater than 0, or

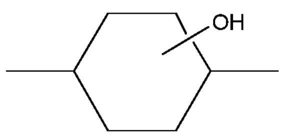

Hydroxylcyclohexanyl.

M can be hydroxyl or halogen or epoxy or carboxylic acid group.

Once the functionalized carbosiloxane is produced it is reacted with an alkylacryloyl compound having the general formula (IV).

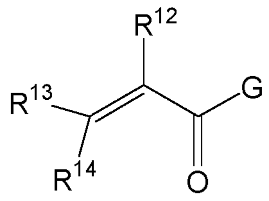

(IV)

wherein G can be a halogen or hydroxyl or alkyloxy having 1 to 10 carbon atoms. $R^{12}$ to $R^{14}$ can be selected from hydrogen or a substituted or unsubstituted saturated monovalent hydrocarbon group of 1 to 20 carbons to produce said silicone monomer of the general formula (I). The reaction of the functionalized carbosiloxane with alkylacryloyl compound having the general formula (IV) can be carried out in the presence of a tertiary amine base or basic ion-exchange resin (IER) or azeotrope forming solvent or reactant. The azeotrope forming solvent can be selected from hexane, heptane, toluene etc. and the reactant such as methylmethacrylate under the inert reaction conditions.

In another embodiment, the monomer of the present invention can be used to form silicone-hydrogels for contact lens applications, via processes known in the art. Accordingly, the present invention is also directed to contact lenses produced from either homo or copolymers of the present invention. The monomers/polymers of the present invention can be formed into contact lenses by spin casting processes, as disclosed in U.S. Pat. Nos. 3,408,429 and 3,496,254, cast molding processes, as disclosed in U.S. Pat Nos. 4,084,459 and 4,197,266, combinations of methods thereof, or any other known method for making contact lenses. Polymerization may be conducted either in a spinning mold, or a stationary mold corresponding to a desired contact lens shape and thickness. The lens may be further subjected to mechanical finishing, as occasion demands. Polymerization may also be conducted in an appropriate mold or vessel to form buttons, plates or rods, which may then be processed (e.g., cut or polished via lathe or laser) to give a contact lens having a desired shape.

In another embodiment, the silicone hydrogel compositions of the present invention form clear, transparent homogeneous single-phase solution that can be cured directly without employing any compatibilizing solvents. Conventional silicone-hydrogel films are generally produced by curing a mixture of hydrophobic silicone monomers and hydrophilic hydrogel monomers in the presence of 10 to 40 wt.% of solvent, as they are incompatible with each other. However in the current invention, the inventive methacrylated carbosiloxane monomers are found to be miscible with conventional hydrophilic hydrogel monomers (such as HEMA) and can form homogeneous solutions suitable to produce silicone-hydrogel films without employing any solvent.

In another embodiment, the silicone hydrogel composition of the present invention can be cured to form silicone-hydrogels for contact lens applications using moulds that have either hydrophilic or hydrophobic surfaces and their combinations. The silicone hydrogel film made from the inventive monomers can be released from the mould and purified from the leachable using either water or organic solvents, such as isopropyl alcohol, or the combinations of water and organic solvents.

In another embodiment of the present invention, the silicone-hydrogel films of the present invention are soft, flexible, and highly transparent and water absorbing. Silicone-hydrogel films made from the inventive monomers exhibit better hydrolytic stability with better oxygen permeability compared to ones made using conventional silicone monomers. The present silicone hydrogel films were found to have dynamic contact angles with water, less than 80° and absorb 10 to 70 wt.% of water, which can vary depending on the silicone hydrogel composition. The silicone hydrogels produced were also found to have good mechanical properties required for the contact lens application.

In another embodiment, the carbosiloxane monomers of the present invention show better hydrolytic stability under acidic and basic conditions in comparison to the corresponding siloxanes.

The polymers of the present invention may also contain ultraviolet absorbents, antimicrobial agents, pigments, colorants and bioactive molecules in the form of additives or comonomers.

As stated above, the silicone-hydrogels of the present invention are oxygen transporting with improved surface wettable properties when compared to silicone monomers having bulky alkyl groups. The monomers and prepolymers employed in accordance with this invention are readily polymerized to form three-dimensional networks, which permit the transport of oxygen with improved wettability along with better mechanicals and optical clarity.

Specific use of the films include intraocular contact lenses, artificial corneas, daily disposable and extended wearable contact lenses or as coatings for biomedical devices.

## EXAMPLES

The following examples are illustrative of the invention, which is properly delineated in the appended claims. Carbosiloxane monomers having different hydrophilic moieties with polymerizable functionality were produced. The

hydrolytic stability of these novel monomers were measured under basic, neutral and acidic pH conditions and showed improved hydrolytic stability compared to conventional silicone monomers with same functionality. The carbosiloxane monomers were further copolymerized with conventional hydrogel monomers or mixtures thereof with different weight ratios to produce silicone hydrogel films. The films obtained with monomers of the current invention were also found to have better oxygen permeability, inherent wettability and lower modulus that are key for the contact lens application.

The silicone-hydrogel films produced were evaluated for lens properties using the following methods.

(1) Equilibrium Water Content

The film was immersed in deionized water for 48 hours then the surface water was wiped off gently using lintless tissue paper. The hydrated film was weighed precisely and then dried in an oven at 37°C for 48 hours and weighed again for dry weight. Water content was calculated based on weight change using the following equation.

$$\%\ \text{Water content} = \frac{\text{Weight of hydrated lens - Weight of dry lens}}{\text{Weight of hydrated lens}} \times 100$$

(2) Water wettability

Water wettability of the film surface was evaluated by measuring contact angle using a captive air bubble method with a Ramé Hart NRL C.A. goniometer. In the captive bubble method, to better simulate the on eye conditions, an air bubble injected from a syringe is brought into contact with the film immersed in milli-Q water and the contact angle is then measured. Lower contact angle values represent a greater degree of hydrophilicity or better surface wettability of the film.

(3) Oxygen Permeability (Dk Value)

Oxygen permeability is one of the important factors in contact lenses and generally the higher the permeability the more desirable the lens. The oxygen permeability (Dk) for these samples was measured using a polarographic technique following ISO 9913 standard method. The film was clamped into the permeation cell and the donor chamber was filled with oxygen saturated PBS (phosphate buffered saline). The concentration of oxygen in the receptor cell was monitored, as a function of time, and the permeability was determined from the slope of concentration vs time plot.

(4) Modulus

The Young's modulus of the hydrated film was measured using an Instron tensile tester. The wet samples were cut into 6 cm x 0.8 cm strips and the mechanical properties were measured with a load cell of 50 N and crosshead speed of 10 mm/minute. The modulus was determined from the initial slope of a stress-strain curve. Modulus is directly correlated to the softness of the material. Lower the modulus, softer is the material.

**MONOMER PREPARATION**

EXAMPLE 1 (Ex. 1):

Synthesis of compound represented by the formula

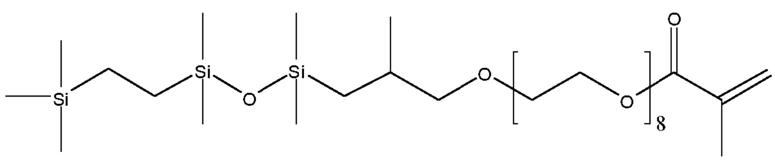

This monomer was prepared using two-step process. In the first step, a hydrosilylation reaction occurs between hydroxyl terminated methallyl polyether and mono-hydride functional carbosiloxane. In the second step, the hydroxyl group is converted into polymerizable methacrylate group through a methacrylation reaction. The mono-hydride functional

carbosiloxane was prepared using the process disclosed in US 7,259,220 B1.

In a specific process, 1-(2-trimethylsilylethyl)-1,1,3,3-tetramethyldisiloxane (25 g), a hydride functional carbosiloxane, and a methallyl-terminated polyethylene glycol (46 g), having an average of 8 ethylene oxide (EO) units in the chain, were introduced into 250 mL three-neck round bottom (RB) flask equipped with a reflux condenser, mechanical stirrer, temperature controller with thermocouple and a nitrogen inlet. The contents were heated to 80°C to 90°C in presence of Karstedt's catalyst (50 to 100 ppm of Pt with respect to total reactant charge) and buffer (US 5,986,122) to prevent side reactions like dehydrocoupling reaction from taking place. After completion of the hydrosilylation, volatile compounds were removed from the reaction product under reduced pressure. The final product, hydroxyl terminated carbosiloxane polyether, was obtained as a colorless, transparent liquid in quantitative yield without any undesired side products. The resultant pure product was well characterized by multinuclear NMR spectroscopy. Synthesis of the silicone polyethers of the present invention can occur with or without solvent. If solvents are used, preferred ones include toluene, isopropylalcohol or methyl ethyl ketone.

H-NMR (ppm) : 0.02 ($Si(CH_3)$, 0.3 & 0.6 ($SiCH_2CH$), 0.4 ($SiCH_2CH_2Si$), 1.0 ($Si(CH_3)$, 1.9 (-CH<), 3.2 & 3.3 (>CH-$CH_2$-O-), 3.6 (-$CH_2CH_2O$-).

Si-NMR (ppm) : 3.4 ($Si(CH_3)_3CH_2$), 7.2 ($O-Si(CH_3)_2(CH_2)$), 8.5 ($O-Si(CH_3)_2(CH_2CH_2)$.

Next, the carbosiloxane polyether that was synthesized in the step above, triethylamine (11.3 g) and methylethylketone (100 ml) were introduced into three-neck one liter RB flask equipped with dropping funnel and a stirring blade. The flask was immersed in an ice bath and methacryloyl chloride (11.2 g) was added drop wise using dropping funnel over a period of approximately 1 hour with constant stirring. After completion of the addition the stirring was continued for another 3 hours at room temperature. The triethylamine hydrochloride salt that precipitated out during the reaction was filtered off. The solvent was removed with a rotary vacuum evaporator and the final monomer was obtained as colorless to pale yellow, transparent liquid. The low boiling point of the solvent used enables the solvent to be removed completely at a temperature of 30°C to 40°C under vacuum (i.e. less than 10 mm Hg). The resulting monomer was well characterized by infrared spectroscopy, multinuclear NMR spectroscopy.

H-NMR (ppm): 0.02 ($Si(CH_3)$, 0.3 & 0.6 ($SiCH_2CH$), 0.4 ($SiCH_2CH_2Si$), 0.98 ($Si(CH_3)$, 1.98 ($CH_3$), 3.1 & 3.3 (>CH-$CH_2$-O-), 3.64 (-$CH_2CH_2O$-), 4.2 ($CH_2COO$), 5.6 & 6.15 ($CH_2$=).

Si-NMR (ppm) : 3.5 ($Si(CH_3)_3CH_2$), 7.2 ($O-Si(CH_3)_2(CH_2)$), 8.4 ($O-Si(CH_3)_2(CH_2CH_2)$.

EXAMPLE 2 (Ex. 2):

Synthesis of compound represented by the formula

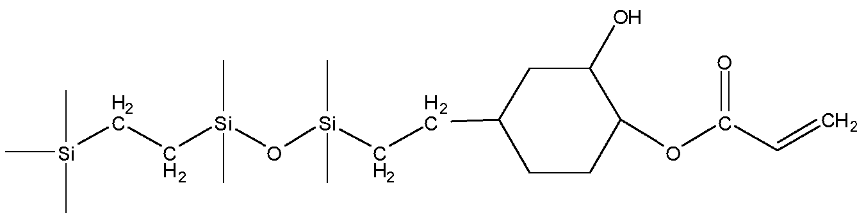

This monomer was prepared was also prepared using two-step process. In the first step, a hydrosilylation reaction occurs between hydride functional carbosiloxane and vinyl functional cyclohexene epoxide. In the second step, the epoxide group is reacted with unsaturated acids to introduce polymerizable group in it.

In a specific process, 1-(2-trimethylsilylethyl)-1,1,3,3-tetramethyldisiloxane (25 g) and vinyl cyclohexene epoxide (13.2 g) were introduced into 250 mL three-neck round bottom (RB) flask equipped with a reflux condenser, mechanical stirrer, temperature controller with thermocouple and a nitrogen inlet. The contents were heated to 80°C to 90°C in presence of Karstedt's catalyst (10 to 50 ppm Pt with respect to total reactant charge) and buffer (US 5,986,122) to prevent side reactions like dehydrocoupling reaction from taking place. After completion of the hydrosilylation, distilling out unwanted volatile compounds under reduced pressure purified the reaction product. The final product, epoxy functional carbosiloxane, was obtained as colorless, transparent liquid in quantitative yield without any undesired side products. The resultant pure product was well characterized by proton NMR spectroscopy. The epoxy functional carbosiloxane of the present invention can occur with or without solvent. If solvents are used, preferred ones include toluene, isopropylalcohol or methyl ethyl ketone.

H-NMR (ppm) : 0.02 ($Si(CH_3)$, 0.4 ($SiCH_2CH_2Si$), 0.5 (SiCH2), 1.2 to 2 ($CH_2$).

Next, the epoxy functional carbosiloxane synthesized above, titanium isopropoxide (0.4 wt% with respect to carbosiloxane) and hydroquinone (0.0025 wt% with respect to carbosiloxane) were introduced into three-neck one liter

RB flask equipped with dropping funnel and a stirring blade. The flask was heated to 90 deg C in an oil bath and then acrylic acid (7.68 g) was added in a drop wise manner into the RB with constant stirring. After completion of the addition the stirring was continued for another 5 hours at 90 deg C. The solvent (toluene) and other volatile impurities were removed with a rotary vacuum evaporator and the final monomer was obtained as colorless, transparent liquid. The resulting mono-acrylated carbosiloxane monomer was well characterized by infrared spectroscopy, proton NMR spectroscopy.
H-NMR (ppm) : 0.02 ($Si(CH_3)$), 0.4 ($SiCH_2CH_2Si$), 0.5 ($SiCH_2$), 1.2 to 2 ($CH_2$), 3.8 & 4.8 ($CH_2$), 5.8, 6.2 & 6.4 ($CH_2$=CH-).

**FORMATION OF SILICONE-HYDROGEL FILMS**

EXAMPLE 3 (Ex. 3)

The compound obtained in Example 1 (49 parts by weight), 2-hydroxy ethyl methacrylate (49 parts by weight), ethylene glycol dimethacrylate (EGDMA) (1 part by weight), and benzoyl peroxide (1 part by weight) were mixed and stirred. The resulting clear, homogeneous and transparent reaction mixture was purged with nitrogen gas and poured into a polyethylene terephthalate mould. The thin film of the reaction mixture was thermally cured using hot air oven at 85°C for 8 hours. After curing, heating the film in 10% isopropyl alcohol (IPA), in deionized (DI) water, released it from the mould and purified from the leachables. The film was further washed with hot DI water. The final silicone hydrogel film thus produced was soft, flexible and transparent and stored in DI water and measured for some of the contact lens properties. Table 1 shows the details of the formulation and the properties of the silicone hydrogel films produced.

EXAMPLES 4 (Ex. 4)

A silicone-hydrogel film was obtained in the same way as in Example 3 except that the compound obtained in Example 2 was used instead of compound obtained in Example 1. The final sample was obtained as clear, transparent thin film and stored in pure water.

Comparative Example 1 (CEx. 1)

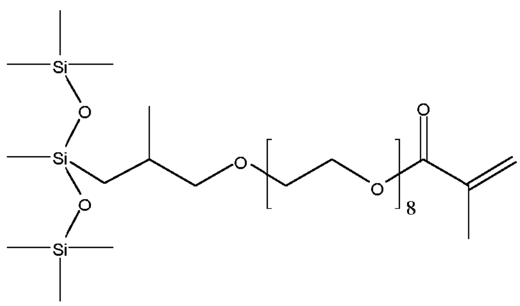

The monomer was prepared in the same way as in Example 1 except that 1,1,1,3,5,5,5-heptamethyltrisiloxane was used instead of 1-(2-trimethylsilylethyl)-1,1,3,3-tetramethyldisiloxane. The mono-acrylated siloxane monomer produced was well characterized by infrared spectroscopy, multinuclear NMR spectroscopy.
H-NMR (ppm) : 0.02 ($Si(CH_3)$), 0.3 & 0.6 ($SiCH_2CH$), 0.98 ($Si(CH_3)$), 1.98 ($CH_3$), 3.1 & 3.3 (>CH-$CH_2$-O-), 3.64 (-$CH_2CH_2O$-), 4.3 ($CH_2COO$), 5.6 & 6.15 ($CH_2$=).
Si-NMR (ppm) : 8 (-$Si(CH_3)_3$), -22 (O-$Si(CH_3)_2$-).

Comparative Example 2 (CEx. 2)

A silicone-hydrogel film was obtained in the same way as in Example 3 except that the compound obtained in Comparative Example 1 was used instead of compound obtained in Example 1. The clear, transparent thin film produced was stored in pure water and measured for the properties.

Hydrolytic stability of the monomer of the present invention was measured using HPLC (US 20100069279). 0.5wt% of the monomers obtained in Example 1 (Ex.1) is introduced into three different vials containing 6.5, 7 and 7.5 pH solutions. The vials were sealed with leak proof seal and heated to 85 deg C. The heat accelerated hydrolytic degradation composition changes was monitored using HPLC as a function of time. In a same way, the monomer

obtained in comparative example 1 was also measured for hydrolytic stability.

The monomer of the current invention (Ex.1) showed improved hydrolytic stability under acidic, basic and neutral conditions in comparison to the conventional siloxane monomer (CEx.2) over the acidic, neutral and basic pH conditions (Figure 1).

**Table 1: Formulation details and the properties of the silicone hydrogel films.**

| Silicone hydrogel | Ex. 3 | CEx. 2 |
|---|---|---|
| **Composition (wt.%)** | | |
| Silicone monomer (Ex 1) | 49 | - |
| Silicone monomer (CEx 1) | - | 49 |
| HEMA | 49 | 49 |
| EGDMA | 1 | 1 |
| Benzoyl peroxide | 1 | 1 |
| **Properties** | | |
| Equilibrium water content (%) | 27 | 30 |
| Dynamic contact angle (at 2 minutes) | 36°±4° | 42°±4° |
| Captive bubble contact angle | 43°±4° | 40°±3° |
| Young's modulus [MPa] | 0.5±0.1 | 0.8±0.3 |
| Oxygen permeability (Dk) [Barrer] | 347±10 | 305±10 |

Table 1 compares the properties of the silicone-hydrogel films produced using the monomers with carbosiloxane linkage (Ex.1) and monomer without the carbosiloxane linkage (Ex.2). The monomer, apart from the improved hydrolytic stability under different pH conditions, showed improved oxygen permeability and lower modulus in comparison to the silicone hydrogel film produced using the conventional silicone monomers.

Stern, et al (J. Polymer Science Part B: Polymer Physics 25 (1987) 1263 - 1298) reported that substitution of methyl groups by bulky groups (e.g., ethyl, isopropyl, butyl, hexyl) on the silicone backbone, or the replacement of siloxane (-SiOSi-) linkage by carbosilane ($-Si(CH_2)_nSi-$) linkage resulted in reduced oxygen permeability. Based on Stern et al report, one would expect the oxygen permeability to get reduced when siloxane linkage (-Si-O-Si) is replaced by carbosiloxane linkage ($-Si(CH_2)_nSi-$) in the backbone chain. Surprisingly, the silicone hydrogel film produced using the carbosiloxane monomer of the current invention showed improved oxygen permeability in comparison to the corresponding siloxane monomer having conventional siloxane linkage.

## Claims

1. A silicone monomer comprising of at least one carbosiloxane linkage having the general formulae (I):

$$(R^1 R^2R^3)Si\text{-}Y^1\text{-}[Si(R^4R^5)(Y^2)]_a\text{-}Si(R^6R^7)\text{-}Z \qquad (I)$$

wherein a is 0 to 100;

$Y^1$ is an unsubstituted divalent alkyl linking group of 1 to 10 carbon atoms;
$Y^2$ is a hetero atom;
$R^1$, $R^2$, $R^3$, $R^4$, $R^5$, $R^6$, and $R^7$ is independently selected from the group consisting of monovalent aliphatic hydrocarbon groups of 1 to 10 carbons,;
Z has the following general formulae (II)

$$-R^{11}\text{-}B\text{-}X \qquad (II)$$

wherein $R^{11}$ is a linear or branched, divalent alkyl linking group having 0 to 20 carbon atoms, B is one of the following divalent moieties

$-O-(C2H_4O)_p-(C3H_6O)_q-(C4H_8O)_r-$

Polyether

wherein p and q are independently 0 to 100; r is 0 to 50 and (p +q + r) is greater than 0, or

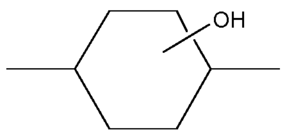

Hydroxylcyclohexanyl,

, and X is acrylamide or a polymerizable group selected from the group consisting of substituted or unsubstituted unsaturated aliphatic hydrocarbons, substituted or unsubstituted aromatic hydrocarbons, acrylates and methacrylates.

2. The silicone monomer of claim 1, wherein $R^1$, $R^2$, $R^3$, $R^4$, $R^5$, $R^6$, $R^7$ and $R^{11}$ independently comprises a saturated monovalent hydrocarbon group of 1 to 9 carbon atoms.

3. The monomer of claim 1 wherein X is acrylamide or a polymerizable moiety having the general formula (III)

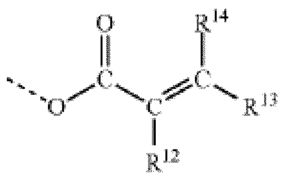

(III)

wherein $R^{12}$, $R^{13}$, and $R^{14}$ is hydrogen or a substituted or unsubstituted saturated monovalent hydrocarbon or halogenated hydrocarbon group of 1 to 20 carbons.

4. The silicone monomer of claim 1, wherein B is a hydrophilic polyethylene glycol moiety which is derived as a water soluble and water dispersible monomer of the formula (IV) shown below:

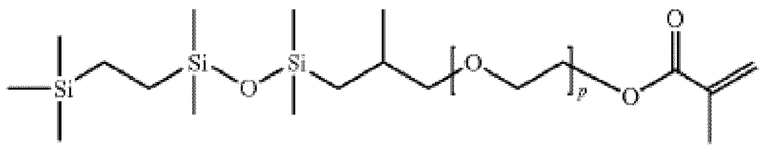

(IV)

wherein p is greater than 5.

5. A silicone monomer of claim 1, wherein B is a hydroxylated cyclohexanyl moiety which is derived as of the formula (V) shown below:

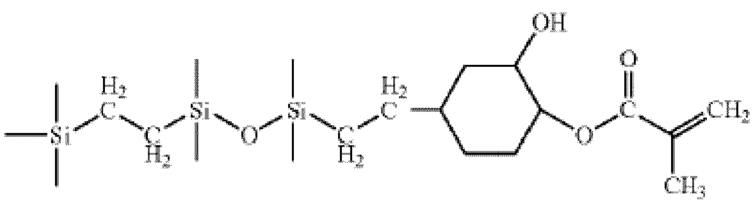

.

6. A silicone-hydrogel copolymer comprising at least 1 silicone monomer of claim 1 and at least 1 hydrogel comonomer

selected from the group consisting of vinylic monomer and an acrylic monomer and further comprises a crosslinking agent, a radical initiator, an antimicrobial agents, an UV-absorbers, a bioactive, and a visibility tinting agent.

**7.** A silicone-hydrogel copolymer comprising of at least 2 silicone monomers of claim 1 wherein at least one silicone monomer is different than at least one other silicone monomer, wherein the ratio of said monomer of claim 1 to said other silicone monomer is 1 to 100.

**8.** The silicone-hydrogel copolymer of claim 6 wherein the acrylic monomer is selected from the group consisting of 2-hydroxy-ethyl-methacrylate (HEMA), 2-hydroxy-ethyl-acrylate (HEA), hydroxyl propyl methacrylate, trimethylammonium 2-hydroxy propyl methacrylate hydrochloride, dimethylaminoethyl methacrylate, glycerol methacrylate, N.N-Dimethyl acrylamide, N-isopropylacrylamide, acrylamide, 2-acrylamido-2-methyl propane sulphonic acid, methacrylamide, acrylic acid, methacrylic acid, and other acrylic monomers containing cationic and zwitterionic moieties and mixture thereof.

**9.** The silicone-hydrogel copolymer of claim 6 wherein the vinylic monomer is selected from the group consisting of N-vinyl-pyrrolidone, N-vinyl-caprolactam, N-vinyl-acetamide, N- vinyl-formamide and N-vinyl-isopropylamide, vinyl benzene, vinyl naphthalene, vinyl pyridine and vinyl alcohol.

**10.** The silicone-hydrogel copolymer composition of claim 6 wherein said crosslinking agent is selected from the group consisting of ethylene glycol dimethacrylate, trimethyloylpropane trimethacrylate, diethyleneglycol dimethacrylate, bisphenol A dimethacrylate, diglycidyl bisphenol A dimethacrylate, dimethacrylate-terminated polyethylene glycol and reactive linear polyether modified silicones.

**11.** A silicone-hydrogel film comprising a polymer of any one of claims 6 to 10.

**12.** A contact lens comprising the silicone-hydrogel film of claim 11.

**Patentansprüche**

**1.** Ein Silikonmonomer, das mindestens eine Carbosiloxan-Verknüpfung umfasst, die die allgemeine Formel (I)

$$(R^1R^2R^3)Si\text{-}Y^1\text{-}[Si(R^4R^5)(Y^2)]_a\text{-}Si(R^6R^7)\text{-}Z \qquad (I)$$

aufweist,

worin a 0 bis 100 ist;
$Y^1$ eine unsubstituierte zweiwertige Alkylverbindungsgruppe mit 1 bis 10 Kohlenstoffatomen ist;
$Y^2$ ein Heteroatom ist;
$R^1$, $R^2$, $R^3$, $R^4$, $R^5$, $R^6$ und $R^7$ in unabhängiger Weise aus der Gruppe ausgewählt sind, die aus einwertigen aliphatischen Kohlenwasserstoffgruppen mit von 1 bis 10 Kohlenstoffatomen besteht;
Z die folgende allgemeine Formel (II)

$$-R^{11}\text{-}B\text{-}X \qquad (II)$$

aufweist,
worin $R^{11}$ eine lineare oder verzweigte, zweiwertige Alkylverbindungsgruppe mit 0 bis 20 Kohlenstoffatomen ist, B eine der folgenden zweiwertigen Einheiten

$$-O-(C_2H_4O)_p-(C_3H_6O)_q-(C_4H_8O)_r-$$

Polyether
worin p und q in unabhängiger Weise 0 bis 100 sind; r 0 bis 50 und (p + q + r) größer als 0 ist, oder

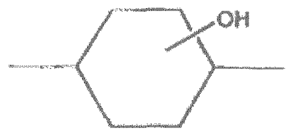

Hydroxylcyclohexanyl ist,

und X Acrylamid oder eine polymerisierbare Gruppe ist, die aus der Gruppe ausgewählt ist, die aus substituierten oder unsubstituierten aliphatischen Kohlenwasserstoffen, substituierten oder unsubstituierten aromatischen Kohlenwasserstoffen, Acrylaten und Methacrylaten besteht.

**2.** Das Silikonmonomer gemäß Anspruch 1, wobei $R^1$, $R^2$, $R^3$, $R^4$, $R^5$, $R^6$, $R^7$ und $R^{11}$ in unabhängiger Weise eine gesättigte einwertige Kohlenwasserstoffgruppe mit 1 bis 9 Kohlenstoffatomen umfassen.

**3.** Das Monomer gemäß Anspruch 1, wobei es sich bei X um Acrylamid oder eine polymerisierbare Einheit handelt, die die allgemeine Formel (III)

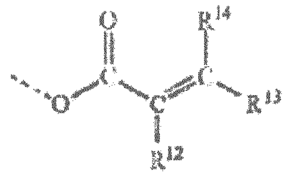

(III)

aufweist,
worin es sich bei $R^{12}$, $R^{13}$ und $R^{14}$ um Wasserstoff oder eine substituierte oder unsubstituierte gesättigte einwertige Kohlenwasserstoff- oder halogenierte Kohlenwasserstoffgruppe mit 1 bis 20 Kohlenstoffatomen handelt.

**4.** Das Silikonmonomer gemäß Anspruch 1, wobei es sich bei B um eine hydrophile Polyethylenglycoleinheit handelt, das als ein wasserlösliches und wasserdispergierbares Monomer von der unten gezeigten Formel (IV) abgeleitet ist:

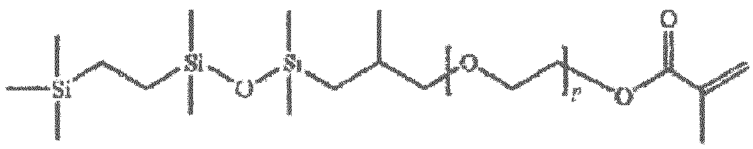

(IV)

worin p größer als 5 ist.

**5.** Ein Silikonmonomer gemäß Anspruch 1, worin es sich bei B um eine hydroxylierte Cyclohexanyleinheit handelt, das von der unten gezeigten Formel (V) abgeleitet ist:

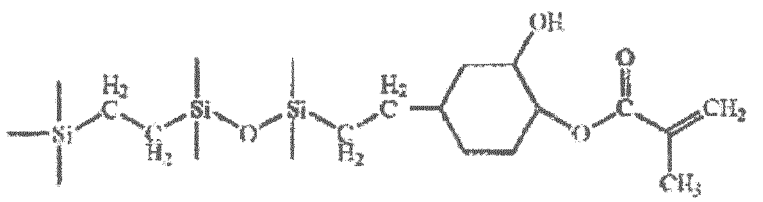

**6.** Ein Silikon-Hydrogel-Copolymer, das mindestens 1 Silikonmonomer gemäß Anspruch 1 und mindestens ein Hydrogel-Comonomer, das aus der Gruppe ausgewählt ist, die aus einem vinylischen Monomer und einem acrylischen Monomer besteht, umfasst, und darüber hinaus ein Quervernetzungsmittel, einen Radikalinitiator, ein antimikrobielles Mittel, einen UV-Absorber, ein bioaktives Mittel, und ein Tönungsmittel umfasst.

7. Ein Silikon-Hydrogel-Copolymer, das mindestens zwei Silikonmonomere gemäß Anspruch 1 umfasst, wobei mindestens ein Silikonmonomer anders ist als mindestens ein anderes Silikonmonomer, wobei das Verhältnis des genannten Monomers gemäß Anspruch 1 zu dem genannten anderen Silikonmonomer 1 zu 100 beträgt.

8. Das Silikon-Hydrogel-Copolymer gemäß Anspruch 6, wobei das acrylische Monomer aus der Gruppe ausgewählt ist, die aus 2-Hydroxyethylmethacrylat (HEMA), 2-Hydroxyethylacrylat (HEA), Hydroxypropylmethacrylat, Trimethylammonium-2-hydroxypropylmethacrylathydrochlorid, Dimethylaminoethylmethacrylat, Glycerinmethacrylat, N,N-Dimethylacrylamid, N-Isopropylacrylamid, Acrylamid, 2-Acrylamido-2-methylpropansulfonsäure, Methacrylamid, Acrylsäure, Methacrylsäure, und anderen acrylischen Monomeren, die kationische und zwitterionische Einheiten enthalten, und Gemische derselben besteht.

9. Das Silikon-Hydrogel-Copolymer gemäß Anspruch 6, wobei das vinylische Monomer aus der Gruppe ausgewählt ist, die aus N-Vinylpyrrolidon, N-Vinylcaprolactam, N-Vinylacetamid, N-Vinylformamid und N-Vinylisopropylamid, Vinylbenzol, Vinylnaphthalin, Vinylpyridin und Vinylalkohol besteht.

10. Die Silikon-Hydrogel-Copolymerzusammensetzung gemäß Anspruch 6, wobei das genannte Quervernetzungsmittel aus der Gruppe ausgewählt ist, die aus Ethylenglycoldimethacrylat, Trimethylolpropantrimethacrylat, Diethylenglycoldimethacrylat, Bisphenol A-Dimethacrylat, Diglycidylbisphenol A-Dimethacrylat, Dimethacrylat-terminiertem Polyethylenglycol und reaktiven, mit linearen Polyethern modifizierten Silikonen besteht.

11. Ein Silikon-Hydrogel-Film, der ein Polymer gemäß einem der Ansprüche 6 bis 10 umfasst.

12. Eine Kontaktlinse, die einen Silikon-Hydrogel-Film gemäß Anspruch 11 umfasst.

**Revendications**

1. Monomère de silicone comprenant au moins une liaison carbosiloxane ayant la formule générale (I) :

$$(R^1R^2R^3)Si\text{-}Y^1\text{-}[Si(R^4R^5)(Y^2)]_a\text{-}Si(R^6R^7)\text{-}Z \qquad (I)$$

dans laquelle a varie de 0 à 100 ;

$Y^1$ représente un groupe de liaison alkyle divalent non substitué de 1 à 10 atome(s) de carbone :
$Y^2$ représente un hétéroatome ;
$R^1$, $R^2$, $R^3$, $R^4$, $R^5$, $R^6$ et $R^7$ sont indépendamment choisis dans le groupe constitué par des groupes hydrocarbonés aliphatiques monovalents de 1 à 10 atome(s) de carbone ;
Z a la formule générale (II) suivante

$$\text{-}R^{11}\text{-}B\text{-}X \qquad (II)$$

dans laquelle $R^{11}$ représente un groupe de liaison alkyle divalent, linéaire ou ramifié, ayant 0 à 20 atomes de carbone, B représente l'un des fragments divalents suivants

$$\text{-}O\text{-}(C_2H_4O)_p\text{-}(C_3H_6O)_q\text{-}(C_4H_8O)_r\text{-}$$

polyéther
où p et q varient indépendamment de 0 à 100 ; r varie de 0 à 50 et (p + q + r) est supérieur à 0, ou

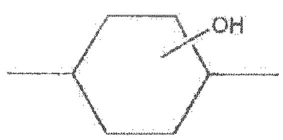

hydroxycyclohexanyle,

et X représente un acrylamide ou un groupe polymérisable choisi dans le groupe constitué par des hydrocarbures

aliphatiques insaturés substitués ou non substitués, des hydrocarbures aromatiques substitués ou non substitués, des acrylates et des méthacrylates.

2. Monomère de silicone de la revendication 1, dans lequel $R^1$, $R^2$, $R^3$, $R^4$, $R^5$, $R^6$, $R^7$ et $R^{11}$ comprennent indépendamment un groupe hydrocarboné monovalent saturé de 1 à 9 atome(s) de carbone.

3. Monomère de la revendication 1, dans lequel X représente un acrylamide ou un fragment polymérisable ayant la formule générale (III)

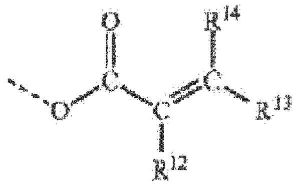

(III)

dans laquelle $R^{12}$, $R^{13}$ et $R^{14}$ représentent un hydrogène ou un groupe hydrocarboné halogéné ou hydrocarboné monovalent saturé substitué ou non substitué de 1 à 20 atome(s) de carbone.

4. Monomère de silicone de la revendication 1, dans lequel B représente un fragment polyéthylène glycol hydrophile qui est dérivé sous forme d'un monomère hydrosoluble et hydrodispersible ayant la formule (IV) représentée ci-dessous :

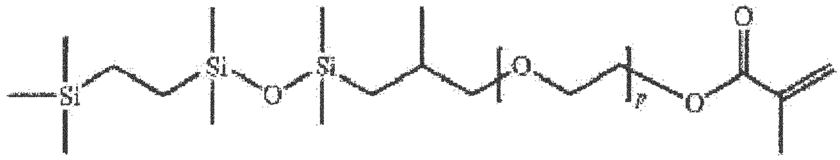

(IV)

dans laquelle p est supérieur à 5.

5. Monomère de silicone de la revendication 1, dans lequel B représente un fragment cyclohexanyle hydroxylé qui est dérivé selon la formule (V) représentée ci-dessous :

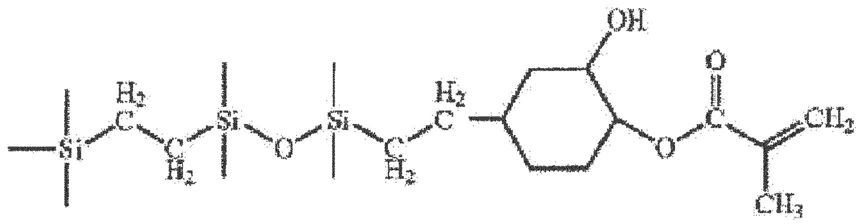

6. Copolymère silicone-hydrogel comprenant au moins 1 monomère de silicone de la revendication 1 et au moins 1 comonomère hydrogel choisi dans le groupe constitué par un monomère vinylique et un monomère acrylique et comprend en outre un agent de réticulation, un initiateur radicalaire, un agent antimicrobien, un absorbeur d'UV, un agent bioactif et un agent de coloration de visibilité.

7. Copolymère silicone-hydrogel comprenant au moins 2 monomères de silicone de la revendication 1, dans lequel au moins un monomère de silicone est différent d'au moins un autre monomère de silicone, dans lequel le rapport dudit monomère de la revendication 1 sur ledit autre monomère de silicone varie de 1 à 100.

8. Copolymère silicone-hydrogel de la revendication 6, dans lequel le monomère acrylique est choisi dans le groupe constitué par le 2-hydroxyéthylméthacrylate (HEMA), le 2-hydroxyéthylacrylate (HEA), le méthacrylate d'hydroxypropyle, le chlorhydrate de 2-hydroxypropylméthacrylate de triméthylammonium, le méthacrylate de diméthylaminoéthyle, le méthacrylate de glycérol, le N.N-diméthylacrylamide, le N-isopropylacrylamide, l'acrylamide, l'acide 2-acrylamido-2-méthylpropane sulfonique, le méthacrylamide, l'acide acrylique, l'acide méthacrylique et d'autres monomères acryliques contenant des fragments cationiques et zwitterioniques et des mélanges de ceux-ci.

**9.** Copolymère silicone-hydrogel de la revendication 6, dans lequel le monomère vinylique est choisi dans le groupe constitué par la N-vinylpyrrolidone, le N-vinylcaprolactame, le N-vinylacétamide, le N-vinylformamide et le N-vinylisopropylamide, le vinylbenzène, le vinylnaphtalène, la vinylpyridine et l'alcool vinylique.

**10.** Composition de copolymère silicone-hydrogel de la revendication 6, dans laquelle ledit agent de réticulation est choisi dans le groupe constitué par le diméthacrylate d'éthylène glycol, le triméthacrylate de triméthyloylpropane, le diméthacrylate de diéthylèneglycol, le diméthacrylate de bisphénol A, le diméthacrylate de diglycidyl bisphénol A, le polyéthylène glycol à terminaison diméthacrylate et des silicones modifiées par un polyéther linéaire réactif.

**11.** Film en silicone-hydrogel comprenant un polymère de l'une quelconque des revendications 6 à 10.

**12.** Lentille de contact comprenant le film en silicone-hydrogel de la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4954587 A
- US 5010141 A
- US 5079319 A
- US 5115056 A
- US 5260000 A
- US 5336797 A
- US 5358995 A
- US 5387632 A
- US 5451617 A
- US 5486579 A
- US 5998498 A
- US 3808178 A
- US 3377371 A
- US 20080081894 A1
- US 4260725 A
- US 4259467 A
- US 7700797 B2
- US 7507775 B2
- US 20110009658 A1
- JP 63295611 A
- WO 8601219 A1
- EP 0131911 A1
- GB 2119951 A
- US 3408429 A
- US 3496254 A
- US 4084459 A
- US 4197266 A
- US 7259220 B1
- US 5986122 A
- US 20100069279 A


### Non-patent literature cited in the description


- **STERN et al.** *J. Polymer Science Part B: Polymer Physics,* 1987, vol. 25, 1263-1298
- **EFIMOV Y. et al.** Synthesis of organosilicon derivatives of acrylic acids. *Journal of general chemistry of the USSR,* 1991, vol. 61 (10), 2083-2091